# EUROPÄISCHE PATENTSCHRIFT

(11) **EP 4 264 187 B1**
(45) Veröffentlichungstag und Bekanntmachung des Hinweises auf die Patenterteilung: **24.06.2026**
(21) Anmeldenummer: 21831213.0
(22) Anmeldetag: 07.12.2021
(51) Int. Cl.: G01D 5/14, G01D 11/24, G01D 11/30

(54) **HÖHENSTANDSSENSOR AUS ZWEI EINSTÜCKIG AUSGEBILDETEN EINHEITEN**
LEVEL SENSOR CONSISTING OF TWO INTEGRAL UNITS
CAPTEUR DE NIVEAU COMPOSÉ DE DEUX UNITÉS RÉALISÉES D'UN SEUL TENANT

(30) Priorität: 18.12.2020 DE 102020216344
(43) Veröffentlichungstag der Anmeldung: 25.10.2023
(73) Patentinhaber: AUMOVIO Germany GmbH, 60488 Frankfurt am Main (DE)
(72) Erfinder: BRÜGGEMANN, Stephan, 60488 Frankfurt am Main (DE); ECKRICH, Jörg, 60488 Frankfurt am Main (DE); KROHN, Thomas, 60488 Frankfurt am Main (DE)
(74) Vertreter: Aumovio Corporation
(86) Internationale Anmeldenummer: PCT/DE2021/200247
(87) Internationale Veröffentlichungsnummer: WO 2022/128017

(56) Entgegenhaltungen:
- WO-A1-2023/004384
- DE-A1- 102007 034 099
- DE-A1- 102011 118 773
- DE-A1- 102014 218 684
- DE-A1- 102015 218 425

## Beschreibung

Die Erfindung betrifft einen Sensor gemäß Oberbegriff von Anspruch 1.

In der DE 10 2015 218 425 A1 ist ein Sensor mit einer Hebeleinheit gezeigt, die in einer Basiseinheit rotatorisch auslenkbar gelagert ist. Die Basiseinheit ist mehrteilig ausgebildet, wobei zunächst durch ein erstes Gehäuseteil eine Lagerung für einen Schaftlagerabschnitt der Hebeleinheit gebildet wird, die anschließend mit einem Kunststoff, der das Gehäuse der Basiseinheit bildet, umspritzt wird.

In der DE 102011 118 773 A1, der DE 10 2014 218 684 A1 und der DE 10 2007 034 099 A1 sind weitere Hebelanordnungen mit jeweils einem Hebelarm gezeigt, der jeweils in einem Basisgehäuse oder einer Basiseinheit gelagert ist.

Der Erfindung liegt die Aufgabe zu Grunde, einen Sensor, umfassend eine Basiseinheit und eine Hebeleinheit vorzuschlagen, wobei der Sensor relativ kostengünstig und/oder robust und/oder kompakt und/oder präzise messend ausgebildet ist.

Diese Aufgabe wird erfindungsgemäß gelöst durch den Sensor gemäß Anspruch 1. Die Erfindung betrifft vorzugweise einen Sensor, welcher eine Hebeleinheit aufweist, welche rotatorisch auslenkbar in einem Lager einer Basiseinheit gelagert ist, wobei die Hebeleinheit einen Schaft aufweist, welcher in dem Lager mit seinem Schaftlagerabschnitt gelagert ist, sowie einen mit diesem Schaft verbundenen Hebel, wobei der Schaft einen Encoder aufweist und wobei ein Sprengring in Nut des Schaftlagerabschnitts anordenbar ist, und wobei die Basiseinheit zumindest ein Sensorelement aufweist, welches den Encoder bzw. das durch diesen erzeugte und/oder modulierte Magnetfeld erfasst.

Die Hebeleinheit ist im Wesentlichen, mit Ausnahme des Encoders, einstückig aus Kunststoff ausgebildetund dass ein Gehäuse der Basiseinheit, in welchem zumindest das Sensorelement angeordnet ist, gemeinsam mit dem Lager der Basiseinheit einstückig aus Kunststoff ausgebildet ist.

Auf dem Innenmantel des Lagers sind umlaufend je zwei voneinander beabstandete Reihen Rastmitteln, einstückig mit dem Lager ausgebildet, angeordnet, insbesondere sind diese beiden Reihen Rastmittel im Wesentlichen parallel zueinander ausgebildet. Besonders bevorzugt bilden diese beiden Reihen Rastmittel eine Nut, ganz besonders bevorzugt eine unterbrochene Nut, auf dem Innenmantel des Lagers aus, wobei diese Nut ganz besonders zweckmäßig nicht in den Innenmantel des Lagers hineinragt sondern ausschließlich durch die beiden Reihen an, insbesondere hervorstehenden, Rastmitteln gebildet wird.

Die Rastmittel der wenigstens einen Reihe weisen entlang der Umlaufrichtung bzw. des Innenumfangs bzw. der Umlauflinie bzw. einer Innenumfangslinie, auf dem Innenmantel des Lagers, jeweils eine geringere oder im Wesentlichen gleiche Breite auf, als/wie die Abstände zu den direkt benachbarten Rastmitteln.

Es ist bevorzugt, dass das Lager der Basiseinheit mehrere Rastmittel aufweist, insbesondere Rasthaken und/oder Rastvorsprünge, welche umlaufend auf dem Innenmantel des Lagers angeordnet sind und einstückig mit dem Lager ausgebildet sind und wobei diese Rastmittel direkt oder indirekt den Schaftlagerabschnitt halten und/oder führen.

Unter einem indirekten Halten und/oder Führen des Schaftlagerabschnitts durch die Rastmittel wird vorzugsweise verstanden, dass ein Sprengring oder ein anderes Verbindungsmittel, welches einen gegenseitigen Formschluss zwischen Lager und Schaftlagerabschnitt bildet bzw. ermöglicht, mittels der Rastmittel gehalten und/oder geführt und/oder gelagert wird.

Das Lager der Basiseinheit ist zweckmäßigerweise im Wesentlichen topfförmig bzw. hohlzylindrisch ausgebildet.

Der Sensor ist vorzugsweise als Winkelsensor ausgebildet, zur Messung eines Verdrehwinkels zwischen Hebeleinheit und Basiseinheit.

Zweckmäßigerweise ist der Sensor als Chassis Positionssensor ausgebildet, zur Erfassung der relativen Auslenkung und/oder Position zwischen einem Fahrzeugchassis und einer Fahrwerkseinheit mittels einer Winkelmessung des Sensors. Dafür weist der Sensor insbesondere eine Hebeleinheit auf, welche rotatorisch auslenkbar in einem Lager einer Basiseinheit gelagert ist, wobei die Hebeleinheit einen Schaft aufweist, welcher in dem Lager mit seinem Schaftlagerabschnitt gelagert ist, sowie einen besonders bevorzugt im Wesentlichen rechtwinklig zu diesem Schaft angeordneten Hebel.

Die vorzugsweise im Wesentlichen einstückige Hebeleinheit, mit Ausnahme des Encoders, weist bevorzugt außerdem ein einstückig mit dem Hebel der Hebeleinheit verbundenes Verbindungselement zur Kopplung mit einer Kraftfahrzeugkomponente auf.

Vorzugsweise ist der Schaftlagerabschnitt, insbesondere die gesamte Hebeleinheit, aus kohlefaserverstärktem und/oder glasfaserverstärktem Kunststoff ausgebildet. Die Hebeleinheit sowie die Basiseinheit sind zweckmäßigerweise aus PBT ausgebildet bzw. das jeweilige Gehäuse. Diese Gehäuse sind jeweils einstückig ausgebildet und sind in einem Spritzgussvorgang ausgebildet.

Zweckmäßigerweise ist entweder der Schaftlagerabschnitt und dabei insbesondere die gesamte Hebeleinheit, aus kohlefaserverstärktem Kunststoff ausgebildet und das Lager der Basiseinheit, insbesondere das Lager und das Gehäuse der Basiseinheit gemeinsam, aus glasfaserverstärktem Kunststoff ausgebildet, oder alternativ vorzugsweise
ist der Schaftlagerabschnitt und dabei insbesondere die gesamte Hebeleinheit, aus glasfaserverstärktem Kunststoff ausgebildet und das Lager der Basiseinheit, insbesondere das Lager und das Gehäuse der Basiseinheit gemeinsam, aus kohlefaserverstärktem Kunststoff ausgebildet. Insbesondere sind nicht beide Einheiten zugleich aus kohlefaserverstärktem Kunststoff, weil dies möglicherweise zu einer elektrischen Kopplung durch die gleiche Materialwahl führen könnten.

Unter einem Encoder wird bevorzugt ein Permanentmagnet verstanden, welcher insbesondere im Wesentlichen zylinderförmig ausgebildet ist und bezüglich des Schafts im Wesentlichen in radialer Richtung magnetisiert ist, besonders bevorzugt diametral magnetisiert ist. Alternativ vorzugsweise ist der Encoder als nicht permanentmagnetisches, ferromagnetisches Target ausgebildet.

Unter dem Sensorelement wird bevorzugt ein Magnetfeldsensorelement, insbesondere ein Hallelement oder ein magnetoresistives Magnetfeldsensorelement verstanden. Alternativ vorzugsweise weist das Sensorelement wenigstens eine bestromte Leiterschleife auf und erfasst das durch den Encoder modulierte Magnetfeld bzw. eine durch den Encoder induzierte elektrische Spannung in der Leiterschleife. Insbesondere weist das Sensorelement wenigstens eine Erzeugerleiterschleife zur Erzeugung eines Magnetfeldes auf und ein oder zwei Empfängerleiterschleifen, in welchen die resultierende induzierte elektrische Spannung, in Abhängigkeit des durch die Erzeugerleiterschleife und den Encoder resultierenden Magnetfelds, erfasst wird.

Das Sensorelement erfasst zweckmäßigerweise das Magnetfeld des Encoders bzw. das von dem Encoder modulierte Magnetfeld.

Bevorzugt ist das Lager der Basiseinheit, insbesondere die gesamte Basiseinheit, aus glasfaserverstärktem Kunststoff ausgebildet.

Durch die bevorzugte Ausbildung des Schaftlagerabschnitts und/oder des Lagers aus kohlefaserverstärktem Kunststoff wird eine Verringerung der Oberflächenreibung zwischen Schaftlagerabschnitt und Lager durch den Abrieb aus Kunststoff bzw. Kohlefasern erreicht.

Insbesondere ist der Sensor so ausgebildet, dass im Lager bzw. an dem Schaftlagerabschnitt kein Fett bzw. kein zusätzliches Schmiermittel eingebracht ist.

Alternativ vorzugweise weist das Lager der Basiseinheit bzw. der Schaftlagerabschnitt ein zusätzliches Schmiermittel bzw. Fett auf.

Bevorzugt sind die Rastmittel als Rasthaken und/oder Rastvorsprünge und/oder Rastnasen ausgebildet.

Bevorzugt weist der Schaftlagerabschnitt der Hebeleinheit eine Nut auf, in welche ein Sprengring angeordnet ist, welcher so ausgebildet ist, dass er lagerseitig im Wesentlichen formschlüssig durch die Rastmittel bzw. beiden Reihen an Rastmitteln aufgenommen werden kann bzw. aufgenommen wird bzw. gelagert wird.

Der Sprengring ist bevorzugt im Wesentlichen rund/kreisrund oder alternativ vorzugsweise nicht kreisrund ausgebildet, sondern im Wesentlichen oval oder oval/rund und dabei wellenförmig ausgebildet. Der Ring ist dabei zweckmäßigerweise unterbrochen ausgebildet.

Es ist bevorzugt, dass die Rastmittel der wenigstens einen Reihe entlang der Umlaufrichtung bzw. des Innenumfangs bzw. der Umlauflinie bzw. einer Innenumfangslinie, auf dem Innenmantel des Lagers jeweils im Wesentlichen gleichmäßig beabstandet zu den jeweils benachbarten Rastmitteln ausgebildet und angeordnet sind, wobei die wenigstens eine Reihe an Rastmitteln oder jeweils beide voneinander beabstandeten Reihen von Rastmitteln, jeweils besonders bevorzugt sechs Rastmittel aufweisen.

Es ist zweckmäßig, dass am Ende des Schafts, auf der dem Hebel abgewandten Seite, der Encoder angeordnet ist, wobei dieser Encoder durch den Kunststoffköper des Schafts ausschließlich formschlüssig gehalten wird und wird insbesondere seitlich umgriffen, besonders bevorzugt an seinem vollen Umfang. Dafür weist der Schaft besonders bevorzugt zwei oder drei oder mehrere Finger bzw. Vorsprünge auf, die den Encoder seitlich, insbesondere hinsichtlich der vollen Höhe bzw. axialen Ausdehnung des Encoders, formschlüssig fixieren, wobei ganz besonders bevorzugt keiner dieser Finger bzw. Vorsprünge den Encoder von unten abstützt.

Zweckmäßigerweise ist der Encoder nicht mittels einer Klebung mit dem Schaft verbunden.

Es ist bevorzugt, dass das Gehäuse der Basiseinheit wenigstens zwei Befestigungsmittel aufweist, welche jeweils ein Gewinde oder eine im Wesentlichen sternförmige Ausnehmung umfassen, wobei die Befestigungsmittel ausgebildet sind, dass eine Schraube in das Material des entsprechenden Befestigungsmittels eingedreht werden kann, indem es zumindest teilweise in das Material dieses Befestigungsmittels hineinschneidet.. Die Befestigungsmittel sind insbesondere aus Kunststoff und einstückig mit dem Gehäuse der Basiseinheit verbunden bzw. gemeinsam einstückig aus Kunststoff ausgebildet. Alternativ vorzugsweise ist eines des beiden Befestigungsmittel als formschlüssig in eine Ausnehmung einer Kraftfahrzeugkomponente einsteckbares Element ausgebildet, welches nicht verschraubt wird und insbesondere eine Einstecknase bzw. einsteckbare Positionierhilfe, beispielsweise als Dorn ausgebildet, welcher eine beispielhaft sternförmige bzw. mehreckige Umfangsform bzw. ein derartiges Profil aufweist.

Das Gehäuse der Basiseinheit weist vorzugsweise wenigstens zwei Ausnehmungen auf, welche im Zuge der Ausbildung des Gehäuses erzeugt werden und welche jeweils einen Teil des Sensorelements und/oder eines Signalverarbeitungselements freistellen. Insbesondere ist im Bereich um diese Ausnehmungen, insbesondere mindestens 1mm um diese Ausnehmungen, bzw. die gesamte Oberfläche an die die Ausnehmung angrenzt, der umspritzte Teil des Gehäuses des Sensorelements und/oder des Gehäuses des Signalverarbeitungselements laseraktiviert, insbesondere vor dem Umspritzen. Hierdurch wird insbesondere die Haftung bzw. Dichtigkeit zwischen dem Gehäuse und dem Sensorelement bzw. dem Signalverarbeitungselement erhöht.

Es ist bevorzugt, dass der Schaft der Hebeleinheit einen Kragen aufweist, welcher so ausgebildet ist, dass er eine umlaufende Kante bzw. einen umlaufenden oberen Rand des im Wesentlichen hohlzylinderförmigen Lagers umgreift und sich axial auf diesem abstützt. Insbesondere ist der Kragen und die umlaufende obere Kante des Lagers so ausgebildet, dass der Kragen mit/ an der Kante einrasten bzw. sich formschlüssig fixieren/ verbinden kann. Besonders bevorzugt weist das Lager an seinem Außenmantel unterhalb der oberen Kante eine Nut auf, in welche beispielsweise ein Schmiermittel bzw. Fett eingebracht ist und in welche ganz besonders bevorzugt eine ringförmige Dichtung eingebracht ist, wodurch der Kragen der Hebeleinheit gegenüber dem Lager abgedichtet wird.

Zweckmäßigerweise weist die Hebeleinheit am Übergang zwischen Hebel und Schaft den Kragen auf.

Bevorzugt ist der Sensor als Winkelsensor und/oder Höhenstandssensor und/oder Chassis-Positionssensor ausgebildet.

Der Schaft weist bevorzugt eine im Wesentlichen zentrische Ausnehmung auf, welche sich von der Seite des Hebels als Sackloch in Richtung der Basiseinheit erstreckt, wobei insbesondere diese zentrische Ausnehmung zumindest in Teilen zylinderförmig und/oder trichterförmig und/oder sich verjüngend ausgebildet ist.

Die Basiseinheit umfasst zweckmäßigerweise ein Sensorelement und ein Signalverarbeitungselement, welche jeweils mit einem Leadframe elektrisch kontaktiert sind und an diesem befestigt sind. Der Leadframe ragt insbesondere mit zwei parallelen Anschlussbereichen in einen Stecker hinein. Der Stecker ist zweckmäßigerweise Teil des Gehäuses der Basiseinheit und das Sensorelement, das Signalverarbeitungselement sowie ein Teil des Leadframes sind in das Gehäuse eingebettet bzw. zumindest teilweise eingebettet bzw. das Gehäuse wird im Zuge des Umspritzens dieser Elemente und eines Teils des Leadframes in einem einzigen Spritzgussvorgang ausgebildet, wobei besonders bevorzugt gleichzeitig als Teil des Gehäuses das Lager, der Stecker sowie die Befestigungsmittel ausgebildet werden.

Bevorzugt weist das Gehäuse der Basiseinheit wenigstens zwei oder drei Ausnehmungen auf, welche im Zuge der Ausbildung des Gehäuses erzeugt werden und welche jeweils einen Teil des Sensorelements bzw. des Signalverarbeitungselements freistellen, insbesondere ist das Sensorelement bzw. das integrierte Sensor-und Signalverarbeitungselement von zwei gegenüberliegenden Ausnehmungen freigestellt. Im Bereich um diese Ausnehmungen ist der umspritzte Teil des Gehäuses des Sensorelements bzw. des Signalverarbeitungselements, also jeweils des eigenen Gehäuses dieser Elemente, laseraktiviert, insbesondere vor dem Umspritzen. Außerdem weist das Gehäuse der Basiseinheit besonders bevorzugt zusätzliche, zweckmäßigerweise zwei, Zentrierausnehmungen auf.

Das Sensorelement und das Signalverarbeitungselement sind zweckmäßigerweise integriert als ein Bauelement ausgebildet.

### Bezugszeichen

1 Hebeleinheit
11 Schaft
12 Hebel
13 Schaftlagerabschnitt
14 Encoder
15 Mittel zum seitlichen Umgreifen des Encoders
16 Kragen der Hebeleinheit
17 Nut
18 Sprengring
19 im Wesentlichen zentrische Ausnehmung
2 Basiseinheit
21 Lager
22 Sensoreinheit
23 Rastmittel
24 Befestigungsmittel Gehäuse Basiseinheit
25 Signalverarbeitungselement
26 umlaufende Kante des Lagers
27 Leadframe
28 Stecker
29 Ausnehmungen Gehäuse Basiseinheit
30 Nut im Außenmantel unterhalb der oberen Kante des Lagers der Basiseinheit

Es zeigen in schematischer Darstellung
- Fig. 1: ein Ausführungsbeispiel des Sensors,
- Fig. 2: eine beispielhafte Hebeleinheit,
- Fig. 3: eine beispielhafte Basiseinheit
- Fig. 4: den beispielhaften Sensor aus Fig. 1 in einem Schnitt, und
- Fig. 5: Ausführungsbespiel des Lagers und des dort gelagerten Schaftlagerabschnitts in einem Schnitt.

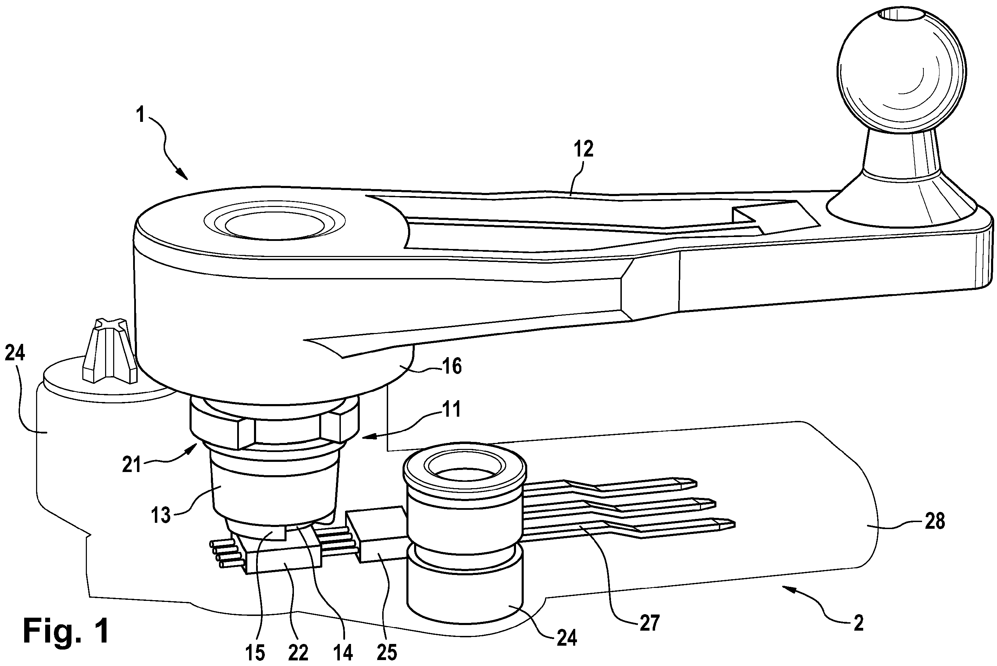

Fig. 1 zeigt ein Ausführungsbeispiel des Sensors. Der Sensor umfasst dabei eine Hebeleinheit 1 und eine Basiseinheit 2. Hebeleinheit besteht aus einem Hebel 12, an welchem ein Schaft 11 mit einem Schaftlageranschnitt 13 angeordnet ist, wobei der Schaftlagerabschnitt 13 in Lager 21 der Basiseinheit eingesteckt und gelagert ist. Am unteren Ende, des Schaftlagerabschnitts 13 ist ein Encoder 14 angeordnet, welcher von beispielhaften Vorsprüngen bzw. Fingern 15 des Schaftlagerabschnitts ausschließlich formschlüssig gehalten wird. Diese Vorsprünge 15 umgreifen ihn jeweils seitlich auf voller Höhe, allerdings untergreifen bzw. umschließen sie Encoder 14 nicht. Am Übergang zwischen Hebel 12 und Schaft 11 weist Hebeleinheit 1 einen Kragen 16 auf, welche die obere umlaufende Kante des Lagers 21 der Basiseinheit 2 umgreift. Hebeleinheit 1 ist bis auf Encoder 14 beispielgemäß einstückig aus kohlefaserverstärktem Kunststoff ausgebildet, unzwar in einem einzigen Spritzgussvorgang.

Zumindest das Gehäuse der Basiseinheit 2, in welchem das Sensorelement 22, das Signalverarbeitungselement 25, beide mit Leadframe 27 kontaktiert und befestigt angeordnet sind, und an welchem die Befestigungsmittel 24 angebracht sind sowie das Lager 21 des Basiselements sind beispielhaft gemeinsam einstückig aus glasfaserverstärktem Kunststoff ausgebildet, unzwar in einem einzigen Spritzgussvorgang. Das Gehäuse der Basiseinheit 2 bildet außerdem mit dem Leadframe als Kontakten einen Stecker 28 aus.

Eines der Befestigungsmittel 24 der Basiseinheit, im Vordergrund in Fig. 1 weist eine eingespritzte Hülse aus Metall zur Verschraubung des Sensors mit einer nicht dargestellten Fahrzeugkomponente auf. Das hintere Befestigungsmittel 24 ist beispielhaft als Dorn mit sternförmigem Profil zum Einstecken in eine Aufnahme der nicht dargestellten Fahrzeugkomponente ausgebildet. Lager 21 des Basiselements weist Rastmittel 23 auf, mit welcher die Schaftlagereinheit geführt bzw. gelagert wird, beispielshaft indirekt mittels eines Sprengrings.

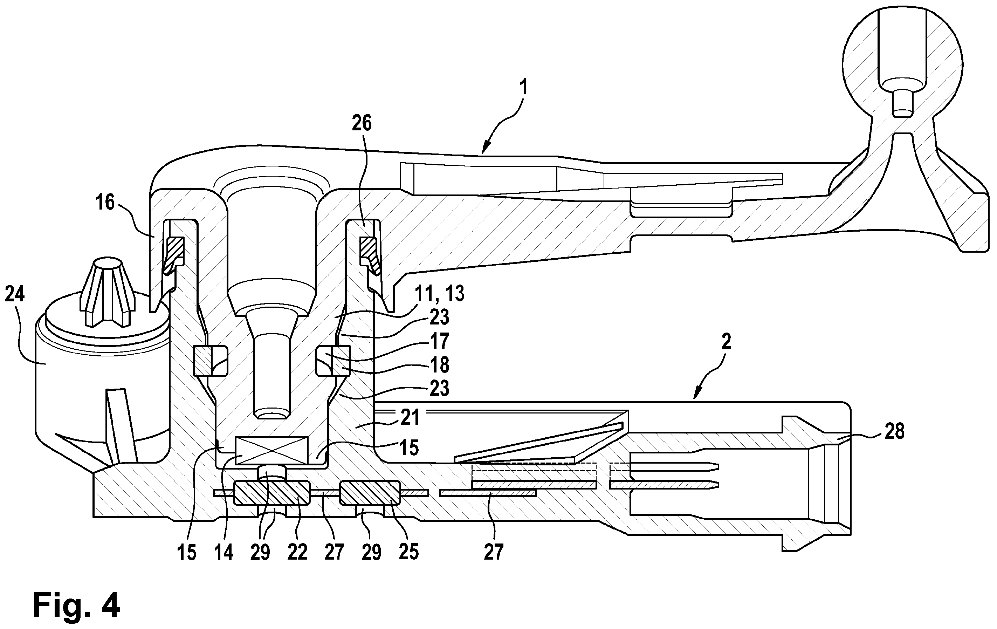

Anhand Fig. 4 ist das Ausführungsbeispiel aus Fig. 1 in einem Schnitt veranschaulicht, wobei Sprengring 18, seitens der Hebeleinheit 1 in einer Nut 17 der Schaftlagereinheit 13 gelagert ist und der Sprengring 18 dabei ebenfalls von den Rastmitteln 23 des Lagers 21 der Basiseinheit 2 geführt bzw. gelagert ist. Rastmittel 23 sind dabei einstückig mit dem Lager 21 verbunden und auf dessen Innenmantel umlaufend entlang einer Innenumfangslinie angeordnet bzw. beispielhaft auf im Wesentlichen zwei zueinander parallelen Innenumfangslinien, wodurch die Rastmittel 23 eine unterbrochene Nut auf dem Innenmantel des Lagers 21 ausbilden.

Das Gehäuse der Basiseinheit 2 weist drei Ausnehmungen 29 auf, welche im Zuge der Ausbildung des Gehäuses erzeugt werden und welche beidseitig einen Teil des Sensorelements 22 freistellen und des Signalverarbeitungselements 25 einseitig freistellen. Im Bereich um diese Ausnehmungen 29 ist der umspritzte Teil des Gehäuses des Sensorelements 22 bzw. des Signalverarbeitungselements 25 laseraktiviert, also jeweils des eigenen Gehäuses dieser Elemente, wodurch eine dichte Verbindung zwischen den Elementgehäusen und dem Gehäuse der Basiseinheit 2 sichergestellt wird. Der Kragen 16 der Hebeleinheit 1 umgreift die umlaufende obere Kante 26 des Lagers 21. Encoder 14 ist am unteren Ende des Schaftes 11 angeordnet und wird durch seitliches Umgreifen ausschließlich formschlüssig gehalten, wobei einer der Vorsprünge 15 bzw. Finger des Schafts veranschaulicht ist in diesem Schnitt.

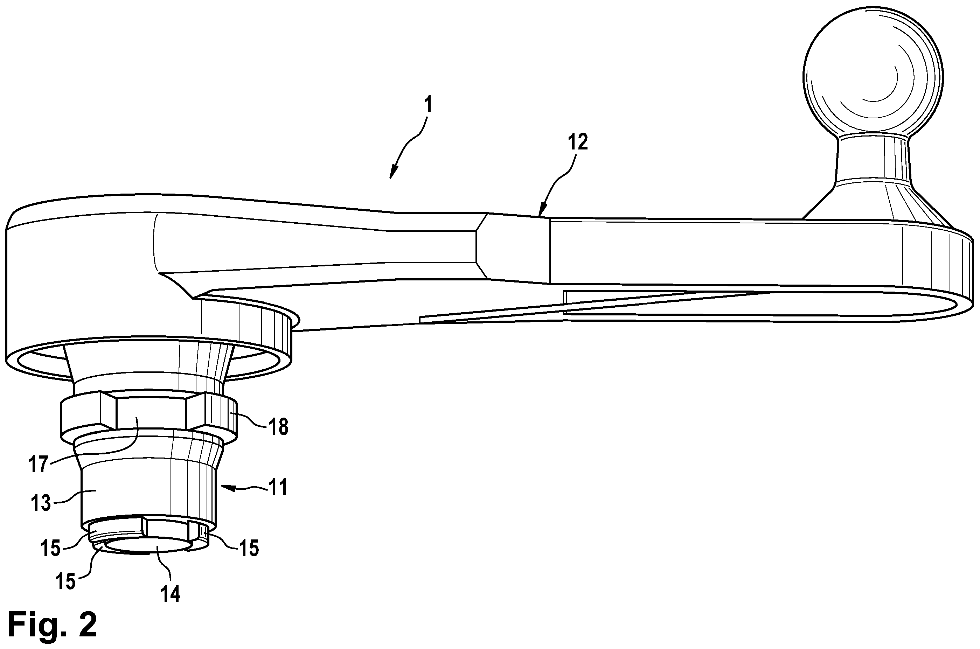

Fig. 2 zeigt beispielhafte Hebeleinheit 1 mit Hebel 12, welcher im Wesentlichen rechtwinklig zu Schaft 11 ausgebildet ist. Schaft 11 umfasst Schaftlagerabschnitt 13, welcher in das nicht dargestellte Lager der Basiseinheit einfügbar und dort rotatorisch beweglich gelagert wird. Schaftlagerabschnitt 13 weist eine umlaufende Nut 17 auf, mit welcher Sprengring 18 verbindbar ist bzw. in diese Nut eingreift bzw. eintaucht. Am unteren bzw. dem Hebel abgewandten Ende des Schaftes 11 ist Encoder 14 mittels der jeweils seitlich den Encoder 14 greifenden Vorsprünge bzw. Finger 15, welche Encoder 14 ausschließlich formschlüssig halten und fixieren. Die Vorsprünge bzw. Finger 15 stehen dabei von Schaft 11 nach unten im Wesentlichen so weit ab, wie die Höhe des Encoders 14 in diese Richtung.

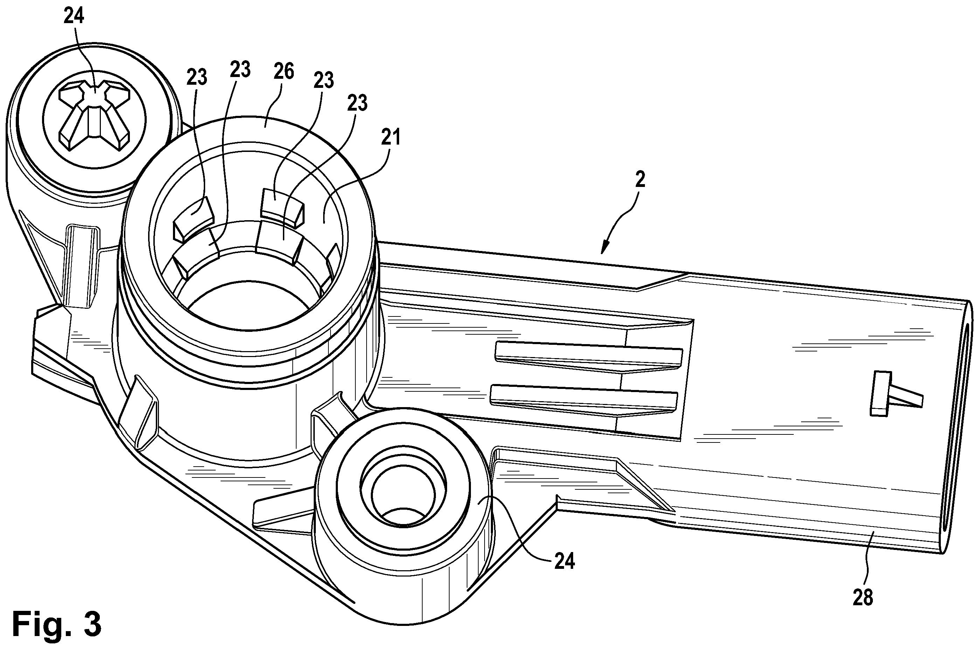

Anhand der Fig. 3 ist die Basiseinheit 2 bespielhaft veranschaulicht, welche ein Lager 21, aufweist, zwei Befestigungsmittel 24 der Basiseinheit sowie Stecker 28. Lager 21 ist im Wesentlichen topfförmig bzw. hohlzylindrisch ausgebildet und weist auf seinem Innenmantel zwei im Wesentlichen zueinander parallele Reihen von Rastnasen als Rastmittel 23 auf, welche gemeinsam eine unterbrochene Nut auf dem Innenmantel des Lagers 21 formen, zur Aufnahme bzw. Lagerung bzw. Führung des nicht dargestellten Sprengrings, welcher seinerseits mit dem nichtdargestellten Schaftlagerabschnitt der Hebeleinheit in Eingriff steht.

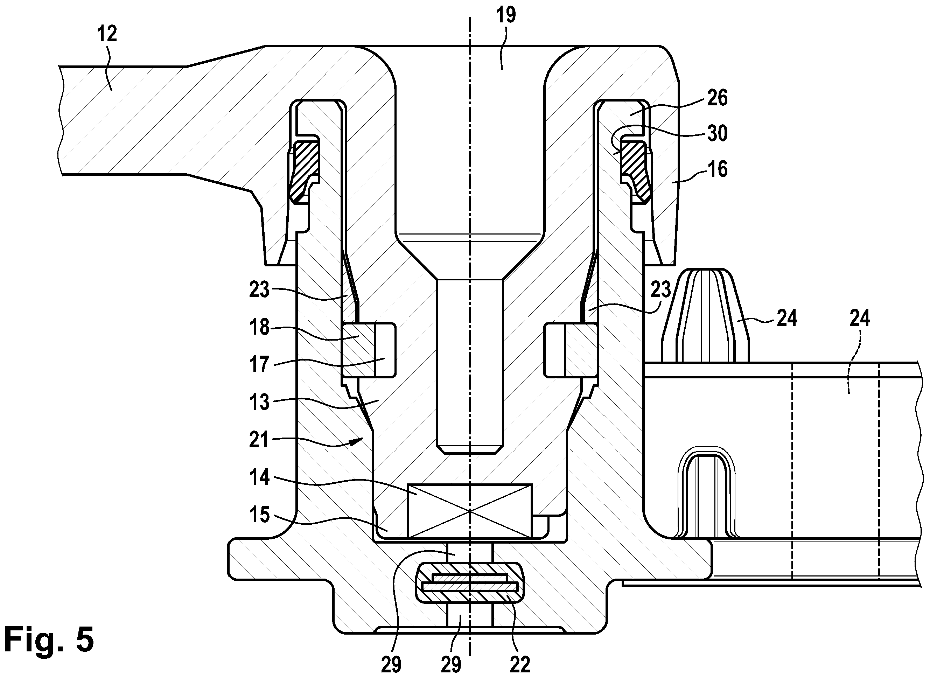

Fig. 5 zeigt beispielhaft einen Schnitt durch das Lager 21 der Basiseinheit und dem dort gelagerten Schaftlagerabschnitt 13 der Hebeleinheit. Der Schaft weist bevorzugt eine im Wesentlichen zentrische Ausnehmung 19 auf, welche sich von der Seite des Hebels 12 als Sackloch in Richtung der Basiseinheit verjüngend erstreckt.

Der Schaft der Hebeleinheit weist außerdem Kragen 16 auf, welcher so ausgebildet ist, dass er umlaufende Kante 26 bzw. einen umlaufenden oberen Rand des im Wesentlichen hohlzylinderförmigen Lagers21 umgreift und sich axial auf diesem abstützt. Dabei ist der Kragen 16 und die umlaufende obere Kante 26 des Lagers so ausgebildet, dass der Kragen mit/ an der Kante einrasten bzw. sich formschlüssig fixieren/ verbinden kann. Beispielgemäß weist das Lager 21 an seinem Außenmantel unterhalb der oberen Kante 26 eine Nut 30 auf, in welche beispielsweise ein Schmiermittel bzw. Fett eingebracht ist und in beispielhaft eine ringförmige Dichtung eingebracht ist, wodurch der Kragen 16 der Hebeleinheit gegenüber dem Lager 21 abgedichtet ist.

Auf dem Innenmantel des Lagers 21 sind umlaufend je zwei voneinander beabstandete Reihen Rastmitteln 23 hier zur Sichtbarmachung verschiedenartig schraffiert angeordnet, aber jeweils einstückig mit dem Lager ausgebildet, dabei sind diese beiden Reihen Rastmittel 23 beispielgemäß im Wesentlichen parallel zueinander ausgebildet und bilden gemeinsam eine unterbrochene Nut auf dem Innenmantel des Lagers 23 aus, wobei diese Nut nicht in den Innenmantel des Lagers hineinragt sondern ausschließlich durch die beiden Reihen an hervorstehenden Rastmitteln 23 gebildet wird. In diese unterbrochene Nut aus Rastmitteln 23 und deiner Nut 17 auf dem Schaftlagerabschnitt 13 taucht jeweils Sprengring 18 ein und verbindet Schaftlagerabschnitt 13 und Lager 21 formschlüssig.

Die Basiseinheit weist außerdem zwei Befestigungsmittel 24 auf.

Am Ende des Schafts, auf der dem Hebel 12 abgewandten Seite, ist der Encoder 14 angeordnet, wobei dieser Encoder 14 durch den Kunststoffköper des Schafts ausschließlich formschlüssig gehalten wird und seitlich umgriffen wird. Dafür weist der Schaft mehrere Finger bzw. Vorsprünge 15 auf, die den Encoder 14 seitlich, hinsichtlich dessen voller Höhe bzw. axialer Ausdehnung formschlüssig fixieren. Unter dem Encoder 14 bzw. diesem gegenüberliegend zugeordnet ist Sensorelement 22 im Gehäuse der Basiseinheit eingebettet und jeweils gegenüberliegend durch eine Ausnehmung 29 über und unter dem Sensorelement 22 freigestellt, wobei das Sensorelementgehäuse im Bereich um die Ausnehmung herum laseraktiviert bzw. laseraufgeraut ist, um eine dichte Verbindung zum Spritzgussgehäuse der Basiseinheit sicher zu stellen.

## Patentansprüche

1. Sensor, welcher eine Hebeleinheit (1) und eine Basiseinheit (2) aufweist, wobei die Hebeleinheit (1) rotatorisch auslenkbar in einem Lager (21) der Basiseinheit (2) gelagert ist, wobei die Hebeleinheit (1) einen Schaft (11) aufweist, welcher in dem Lager (21) mit seinem Schaftlagerabschnitt (13) gelagert ist, sowie einen mit diesem Schaft (11) verbundenen Hebel (12), wobei der Schaft (11) einen Encoder (14) aufweist und wobei ein Sprengring in einer Nut des Schaftlagerabschnitts anordenbar ist, und
wobei die Basiseinheit (2) zumindest ein Sensorelement (22) aufweist, welches den Encoder (14) erfasst,
die Hebeleinheit (1) im Wesentlichen, mit Ausnahme des Encoders (14), einstückig und in einem Spritzgussvorgang aus Kunststoff ausgebildet ist und dass ein Gehäuse der Basiseinheit (2), in welchem zumindest das Sensorelement (22) angeordnet ist, gemeinsam mit dem Lager (21) der Basiseinheit (2) einstückig und in einem Spritzgussvorgang aus Kunststoff ausgebildet ist,
**dadurch gekennzeichnet, dass**
auf dem Innenmantel des Lagers (21) umlaufend je zwei voneinander beabstandete Reihen Rastmitteln (23), einstückig mit dem Lager (21) ausgebildet, angeordnet sind, insbesondere sind diese beiden Reihen Rastmittel (23) im Wesentlichen parallel zueinander ausgebildet, und
die Rastmittel (23) der wenigstens einen Reihe entlang der Umlaufrichtung/des Innenumfangs auf dem Innenmantel des Lagers, jeweils eine geringere Breite aufweisen, als die Abstände zu den direkt benachbarten Rastmitteln (23).

2. Sensor nach Anspruch 1, **dadurch gekennzeichnet, dass** das Lager (21) der Basiseinheit mehrere Rastmittel (23) aufweist, insbesondere Rasthaken und/oder Rastvorsprünge, welche umlaufend auf dem Innenmantel des Lagers (21) angeordnet sind und einstückig mit dem Lager ausgebildet sind und wobei diese Rastmittel (23) direkt oder indirekt den Schaftlagerabschnitt (13) halten und/oder führen.

3. Sensor nach mindestens einem der Ansprüche 1 bis 2, **dadurch gekennzeichnet, dass** die Rastmittel (23) der wenigstens einen Reihe entlang der Umlaufrichtung/ des Innenumfangs auf dem Innenmantel des Lagers (21) jeweils im Wesentlichen gleichmäßig beabstandet zu den jeweils benachbarten Rastmitteln (23) ausgebildet und angeordnet sind, wobei die wenigstens eine Reihe an Rastmitteln (23) oder jeweils beide voneinander beabstandeten Reihen von Rastmitteln (23), jeweils insbesondere sechs Rastmittel aufweisen.

4. Sensor nach mindestens einem der vorhergehenden Ansprüche, **dadurch gekennzeichnet, dass** der Schaftlagerabschnitt (13), insbesondere die gesamte Hebeleinheit (1), aus kohlefaserverstärktem Kunststoff ausgebildet ist.

5. Sensor nach mindestens einem der vorhergehenden Ansprüche, **dadurch gekennzeichnet, dass** das Lager (21) der Basiseinheit (2) aus glasfaserverstärktem Kunststoff ausgebildet ist.

6. Sensor nach mindestens einem der vorhergehenden Ansprüche, **dadurch gekennzeichnet, dass** am Ende des Schafts (11), auf der dem Hebel (12) abgewandten Seite, der Encoder (14) angeordnet ist, wobei dieser Encoder (14) durch den Kunststoffköper des Schafts ausschließlich formschlüssig gehalten wird und wird insbesondere seitlich umgriffen, besonders bevorzugt an seinem vollen Umfang.

7. Sensor nach mindestens einem der vorhergehenden Ansprüche, **dadurch gekennzeichnet, dass** das Gehäuse der Basiseinheit (2) wenigstens zwei Befestigungsmittel (24) aufweist, welche jeweils ein Gewinde oder eine im Wesentlichen sternförmige Ausnehmung umfassen, wobei die Befestigungsmittel (24) ausgebildet sind, dass eine Schraube in das Material des entsprechenden Befestigungsmittels (24) eingedreht werden kann, indem es zumindest teilweise in das Material dieses Befestigungsmittels (24) hineinschneidet.

8. Sensor nach mindestens einem der vorhergehenden Ansprüche, **dadurch gekennzeichnet, dass** das Gehäuse der Basiseinheit (2) wenigstens zwei Ausnehmungen (29) aufweist, welche im Zuge der Ausbildung des Gehäuses erzeugt werden und welche jeweils einen Teil des Sensorelements (22) und/oder eines Signalverarbeitungselements (25) freistellen.

9. Sensor nach Anspruch 8, **dadurch gekennzeichnet, dass** im Bereich um diese Ausnehmungen (29) ein umspritzter Teil des Gehäuses des Sensorelements (22) und/oder des Gehäuses des Signalverarbeitungselements (25) laseraktiviert ist, insbesondere vor dem Umspritzen.

10. Sensor nach mindestens einem der vorhergehenden Ansprüche, **dadurch gekennzeichnet, dass** der Schaft (11) der Hebeleinheit (1) einen Kragen (16) aufweist, welcher so ausgebildet ist, dass er eine umlaufende Kante (26) des im Wesentlichen hohlzylinderförmigen Lagers (21) umgreift und sich axial auf dieser abstützt.

11. Sensor nach mindestens einem der vorhergehenden Ansprüche, **dadurch gekennzeichnet, dass** der Sensor als Winkelsensor und/oder Höhenstandssensor und/oder Chassis-Positionssensor ausgebildet ist.

## Claims

1. A sensor which has a lever unit (1) and a base unit (2), wherein the lever unit (1) is rotationally deflectably mounted in a bearing (21) of the base unit (2), wherein the lever unit (1) has a shaft (11) which is mounted by way of its shaft bearing portion (13) in the bearing (21) and has a lever (12) connected to said shaft (11), wherein the shaft (11) has an encoder (14) and wherein a snap ring can be arranged in a groove of the shaft bearing portion, and
wherein the base unit (2) has at least one sensor element (22) which detects the encoder (14),
the lever unit (1), with the exception of the encoder (14), being formed substantially integrally from plastics, and that a housing of the base unit (2) in which at least the sensor element (22) is arranged is formed integrally from plastics in an injection moulding process, together with the bearing (21) of the base unit (2), **characterised in that**
two mutually spaced-apart rows of detent means (23) are each arranged circumferentially on the inner shell of the bearing (21) and formed integrally with the bearing (21), said two rows of detent means (23) are in particular formed substantially parallel to one another, and
the detent means (23) of the at least one row each have a width along the peripheral direction/the inner circumference on the inner shell of the bearing which is smaller than the spacings to the directly adjacent detent means (23).

2. The sensor as claimed in claim 1, **characterised in that**
the bearing (21) of the base unit has multiple detent means (23), in particular detent hooks and/or detent projections, which are arranged circumferentially on the inner shell of the bearing (21) and which are formed integrally with the bearing, and wherein said detent means (23) directly or indirectly hold and/or guide the shaft bearing portion (13).

3. The sensor as claimed in at least any one of claims 1 to 2, **characterised in that** the detent means (23) of the at least one row are each formed and arranged so as to be substantially uniformly spaced apart, along the peripheral direction/the inner circumference on the inner shell of the bearing (21), from the respective adjacent detent means (23), wherein the at least one row of detent means (23), or each of the two mutually spaced-apart rows of detent means (23), each have in particular six detent means.

4. The sensor as claimed in at least any one of the preceding claims, **characterised in that** the shaft bearing portion (13), in particular the entire lever unit (1), is formed from carbon fibre-reinforced plastics.

5. The sensor as claimed in at least any one of the preceding claims, **characterised in that** the bearing (21) of the base unit (2) is formed from glass fibre-reinforced plastics.

6. The sensor as claimed in at least any one of the preceding claims, **characterised in that** the encoder (14) is arranged at the end of the shaft (11) on the side facing away from the lever (12), wherein said encoder (14) is held exclusively in a form-fitting manner and is in particular engaged around laterally, particularly preferably over its full circumference, by the plastic twill of the shaft.

7. The sensor as claimed in at least any one of the preceding claims, **characterised in that** the housing of the base unit (2) has at least two fastening means (24), each of which comprising a thread or a substantially star-shaped recess, wherein the fastening means (24) are formed such that a screw can be screwed into the material of the corresponding fastening means (24) **in that** said screw at least partially cuts into the material of said fastening means (24).

8. The sensor as claimed in at least any one of the preceding claims, **characterised in that** the housing of the base unit (2) has at least two recesses (29) which are produced during the forming of the housing and which each expose a part of the sensor element (22) and/or of a signal processing element (25).

9. The sensor as claimed in claim 8, **characterised in that** an overmoulded part of the housing of the sensor element (22) and/or of the housing of the signal processing element (25) is laser-activated in the region around said recesses (29), in particular prior to the overmoulding process.

10. The sensor as claimed in at least any one of the preceding claims, **characterised in that** the shaft (11) of the lever unit (1) has a collar (16) which is formed to engage around, and be supported axially on, a circumferential edge (26) of the substantially hollow cylindrical bearing (21).

11. The sensor as claimed in at least any one of the preceding claims, **characterised in that** the sensor is configured as an angle sensor and/or level sensor and/or chassis position sensor.

## Revendications

1. Capteur, présentant une unité de levier (1) et une unité de base (2), dans lequel l'unité de levier (1) est montée de manière pivotante en rotation dans un palier (21) de l'unité de base (2), dans lequel l'unité de levier (1) présente une tige (11), laquelle est montée dans le palier (21) par sa section de palier de tige (13), ainsi qu'un levier (12) relié à cette tige (11), dans lequel la tige (11) présente un codeur (14) et dans lequel une bague de retenue est apte à être disposée dans une gorge de la section de palier de tige, et
dans lequel l'unité de base (2) présente au moins un élément capteur (22), lequel détecte le codeur (14),
l'unité de levier (1) étant réalisée essentiellement en une seule pièce et en matière plastique par un procédé de moulage par injection, à l'exception du codeur (14), et en ce qu'un boîtier de l'unité de base (2), dans lequel est disposé au moins l'élément capteur (22), est réalisé conjointement avec le palier (21) de l'unité de base (2) en une seule pièce et en matière plastique par un procédé de moulage par injection, **caractérisé en ce que**
sur la surface intérieure du palier (21) sont disposées, de manière périphérique, respectivement deux rangées de moyens d'encliquetage (23) espacées l'une de l'autre et réalisées d'une seule pièce avec le palier (21), ces deux rangées de moyens d'encliquetage (23) étant en particulier réalisées essentiellement parallèles l'une à l'autre, et
les moyens d'encliquetage (23) de l'au moins une rangée présentent, le long de la direction périphérique / de la circonférence intérieure sur la surface intérieure du palier, chacun une largeur inférieure aux distances qui les séparent des moyens d'encliquetage (23) directement adjacents.

2. Procédé selon la revendication 1, **caractérisé en ce que**
le palier (21) de l'unité de base présente plusieurs moyens d'encliquetage (23), en particulier des crochets d'encliquetage et/ou des saillies d'encliquetage, lesquels sont disposés de manière périphérique sur la surface intérieure du palier (21) et sont réalisés d'un seul tenant avec le palier et dans lequel ces moyens d'encliquetage (23) maintiennent et/ou guident directement ou indirectement la section de palier de tige (13).

3. Capteur selon au moins l'une des revendications 1 à 2, **caractérisé en ce que** les moyens d'encliquetage (23) de l'au moins une rangée sont réalisés et disposés, le long de la direction périphérique / de la circonférence intérieure sur la surface intérieure du palier (21), chacun sensiblement à intervalles réguliers par rapport aux moyens d'encliquetage (23) respectivement adjacents, dans lequel l'au moins une rangée de moyens d'encliquetage (23), ou respectivement les deux rangées de moyens d'encliquetage (23) espacées l'une de l'autre, présentent chacune en particulier six moyens d'encliquetage.

4. Capteur selon au moins l'une des revendications précédentes, **caractérisé en ce que** la section de palier de tige (13), en particulier l'ensemble de l'unité de levier (1), est réalisée en matière plastique renforcée de fibres de carbone.

5. Capteur selon au moins l'une des revendications précédentes, **caractérisé en ce que** le palier (21) de l'unité de base (2) est réalisé en matière plastique renforcée de fibres de verre.

6. Capteur selon au moins l'une des revendications précédentes, **caractérisé en ce que,** à l'extrémité de la tige (11), du côté opposé au levier (12), est disposé le codeur (14), dans lequel ce codeur (14) est maintenu exclusivement par complémentarité de forme par le corps en matière plastique de la tige et est en particulier enserré latéralement, de manière particulièrement préférée sur toute sa circonférence.

7. Capteur selon au moins l'une des revendications précédentes, **caractérisé en ce que** le boîtier de l'unité de base (2) présente au moins deux moyens de fixation (24), lesquels comprennent respectivement un filetage ou un évidement essentiellement en forme d'étoile, dans lequel les moyens de fixation (24) sont configurés de sorte qu'une vis puisse être vissée dans le matériau du moyen de fixation (24) correspondant en découpant au moins partiellement dans le matériau de ce moyen de fixation (24).

8. Capteur selon au moins l'une des revendications précédentes, **caractérisé en ce que** le boîtier de l'unité de base (2) présente au moins deux évidements (29), lesquels sont formés lors de la réalisation du boîtier et qui dégagent respectivement une partie de l'élément capteur (22) et/ou d'un élément de traitement de signal (25).

9. Capteur selon la revendication 8, **caractérisé en ce que,** dans la zone entourant ces évidements (29), une partie surmoulée du boîtier de l'élément capteur (22) et/ou du boîtier de l'élément de traitement de signal (25) est activée par laser, en particulier avant le surmoulage.

10. Capteur selon au moins l'une des revendications précédentes, **caractérisé en ce que** la tige (11)de l'unité de levier (1) présente un collet (16), lequel est configuré de telle sorte qu'il enserre un bord périphérique (26) du palier (21) essentiellement en forme de cylindre creux et s'y appuie axialement.

11. Capteur selon au moins l'une des revendications précédentes, **caractérisé en ce que** le capteur est configuré en tant que capteur d'angle et/ou capteur de niveau de hauteur et/ou capteur de position de châssis.
